# EUROPÄISCHE PATENTANMELDUNG

(11) **EP 0 714 814 A1**
(43) Veröffentlichungstag der Anmeldung: **05.06.1996**
(21) Anmeldenummer: 95118284.9
(22) Anmeldetag: 21.11.1995
(51) Int. Cl.: B60R 21/16

(54) **Airbag-Modul**

(30) Priorität: 28.11.1994 DE 4442013
(71) Anmelder: P A R S Passive Rückhaltesysteme GmbH, 63755 Alzenau (DE)
(72) Erfinder: Matschi, Michael, D-93092 Barbing-Sarsching (DE); Bischoff, Michael, D-63791 Karlstein-Grosswelzhiem (DE)
(74) Vertreter: Rieger, Harald, Dr.

(57) **Zusammenfassung**

In der Seitenstruktur eines Kraftfahrzeugs ist ein Airbag-Modul einbaubar, dessen Gassack sich im Falle eines Seitenaufpralls des Kraftfahrzeugs in den von der Seitenstruktur und dem benachbart sitzenden Fahrzeuginsassen gebildeten Zwischenraum schiebt. Zur Vermeidung von Verletzungen besteht der Gassack zwei deckungsgleichen übereinanderliegenden Mantelabschnitten (3,4), die an ihren Kanten durch Nähen miteinander verbunden sind, wobei wenigstens 50% der Länge der Nahtstrecke als Innennaht (7) und der Rest als Außennaht (8) ausgebildet ist.

## Beschreibung

Die Erfindung betrifft ein Airbag-Modul, das in die Seitenstruktur eines Kraftfahrzeugs, vorzugsweise in dessen Seitentür oder in dem der Seitenstruktur direkt benachbarten Abschnitt des Fahrzeugsitzes einbaubar ist und zum Schutz gegen einen dynamischen Seitenaufprall dient, bei dem der Gassack im aufgeblasenen Zustand im von der Seitenstruktur und dem Kopf- und/oder Thorax-Bereich des auf dem der Seitenstruktur benachbart angeordneten Fahrzeugsitz sitzenden Fahrzeuginsassen gebildeten Zwischenraum ausfüllt.

Obwohl der Seitenaufprall von Kraftfahrzeugen nur etwa 20% aller Unfälle ausmacht, gehört der Seitenaufprall zu den Unfallarten mit den schwersten Verletzungen. Um die Gefahr schwerer und tödlicher Verletzung von Insassen von Personenkraftwagen bei einem Seitenaufprall zu reduzieren, werden gemäß US-Standard-No. 214 (FMVSS 214) seit September 1993 bestimmte Anforderungen an die Aufpralleigenschaften von Personenkraftwagen - ausgedrückt in Beschleunigungswerten - gestellt. So darf jeder Personenwagen bei Seitenaufprall mittels einer mit einer Geschwindigkeit von 53,9 km/h bewegten verformbaren unter einem Winkel von 63° auf den Personenkraftwagen auftreffenden Barriere für den Insassen die Seitenbeschleunigung des Brustkorbs von 85g für Personenkraftwagen mit vier Seitentüren und 90g für Personenkraftwagen mit zwei Seitentüren und die Beschleunigung des Beckens von 130 g nicht überschreiten. Zur Erhöhung des Schutzes von Fahrzeuginsassen gegen einen Seitenaufprall des Kraftfahrzeugs sind eine Reihe von Sicherheitsmaßnahmen bekannt, so zeigen die GB-A-2 220 620, DE-A-4 223 620 und DE-A-4 301 193 eine in der Seitentür eines Kraftfahrzeugs untergebrachte Gassack-Aufprallschutz-Baueinheit. Im Falle eines Seitenaufpralls schiebt der sich aufblasende und entfaltende Gassack zwischen den Fahrzeuginsassen und die benachbarte Seitenwand des Fahrzeugs. Bei der in der DE-A-4 223 620 dargestellten Gassack-Aufprallschutz-Baueinheit sind ein Gasgenerator und der damit verbundene aufblasbare Gassack an einer Stelle innerhalb des Fahrzeugkörpers seitlich von dem Fahrzeuginsassen angeordnet. Der Gasstrom ist nach oben in den Gassack gerichtet, so daß der Gassack nach oben aufgeblasen und entfaltent wird und den Raum zwischen den Fahrzeuginsassen und der diesen benachbarten Seitenstruktur des Kraftfahrzeugs ausfüllt.

Bei den bisher in der Seitenstruktur von Kraftfahrzeugen oder in dem der Seitenstruktur direkt benachbarten Abschnitt des Fahrzeugsitzes eingebauten Airbag-Modulen wird üblicherweise ein Gassack verwendet, der aus mehreren entsprechend zugeschnittenen Gewebeeinzelteilen besteht, die durch Nähen zusammengefügt sind, wobei die Nahtzugaben außen verlaufen. Durch die vorstehenden Nahtzugaben besteht jedoch die Gefahr, daß beim plötzlichen Aufblasen und Entfalten des Gassacks als Folge eines Seitenaufpralls des Kraftfahrzeugs der Fahrzeuginsasse durch die Nahtzugaben verletzt wird.

Es ist deshalb die Aufgabe der vorliegenden Erfindung, den Gassack des eingangs genannten Airbag-Moduls so auszubilden, daß der Fahrzeuginsasse beim plötzlichen Aufblasen und Entfalten des Gassacks bei einem Seitenaufpralls des Kraftfahrzeugs nicht verletzt werden kann.

Die Lösung dieser Aufgabe besteht darin, daß der Gassack aus zwei deckungsgleichen übereinanderliegenden Mantelabschnitten eines entsprechenden Textilgewebes besteht, die an ihren Kanten durch Nähen verbunden sind, wobei wenigstens 50% der Länge der Nahtstrecke als Innennaht und der Rest als Außennaht, die im unteren Abschnitt des aufgeblasenen und entfalteten Gassack verläuft, ausgebildet ist.

Vorzugsweise besteht der Gassack aus einem einteiligen um die Projektionsachse gefalteten Gewebezuschnitt.

Nach einem weiteren Erfindungsmerkmal ist die Auströmöffnung des Gassacks im Übergangsbereich von der Innen- zur Außennaht angeordnet.

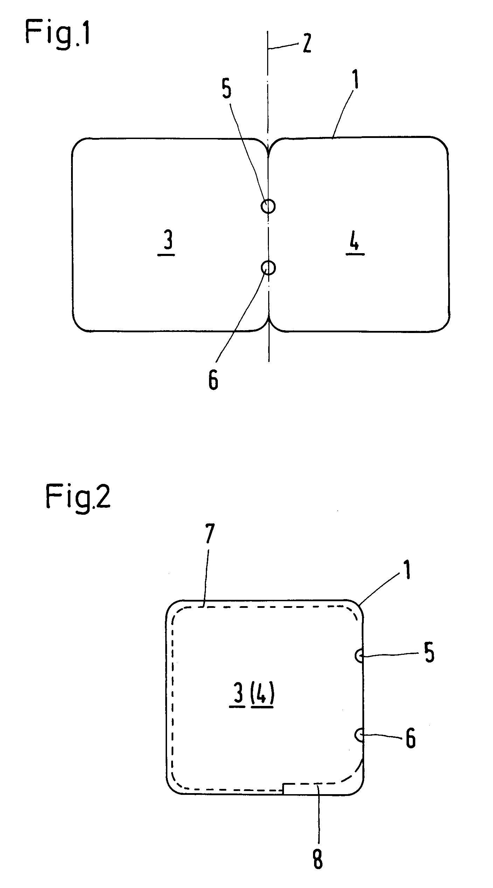

Die Erfindung ist in der Zeichnung beispielhaft dargestellt und wird im folgenden näher erläutert. Es zeigen
Fig. 1 eine Draufsicht auf den Gewebezuschnitt des Gassacks,
Fig. 2 eine Seitenansicht des aufgeblasenen und entfalteten Gassacks.

Der aus einem geeigneten textilen Gewebe ausgeschnittene bzw. ausgestanzte einteilige Zuschnitt (1) des Gassacks wird in der Ebene der Projektionsachse (2) der beiden Hälften (3,4) mit einer Einströmöffnung (5) und einer Ausströmöffnung (6) versehen. Danach wird die eine Hälfte (3) bzw. (4) des Zuschnitts (1) um die Projektionsachse (2) um 180° gefaltet und die beiden Hälften (3,4) an ihren Kanten durch Nähen auf eine Länge von 85% der Naht (7) verbunden. Anschließend wird der Gassack gewendet, so daß die Naht (7) zur Innennaht wird und dann die restliche Länge der Nahtstrecke als Außennaht (8) fertiggestellt wird.

Der mit der Erfindung erzielte Vorteil besteht insbesondere darin, daß der Teil der Nahtstrecke die beim Aufblasen des Gassacks dem Fahrzeuginsassen zugewendet ist, als Innennaht ausgeführt ist und somit durch die Nahtzugabe keine Verletzungen hervorgerufen werden können.

## Patentansprüche

1. Airbag-Modul, das in die Seitenstruktur eines Kraftfahrzeugs, vorzugsweise in dessen Seitentür oder in dem der Seitenstruktur direkt benachbarten Abschnitt des Fahrzeugsitzes einbaubar ist und zum Schutz gegen einen dynamischen Seitenaufprall dient, bei dem der Gassack des Airbag-Moduls in dem von der Seitenstruktur und dem Kopf- und/oder Thorax-Bereich des auf dem benachbart angeordneten Fahrzeugsitz sitzenden Fahrzeuginsassen gebildeten Zwischenraum liegt, dadurch gekennzeichnet, daß der Gassack zwei deckungsgleichen übereinanderliegenden Mantelabschnitten (3,4) eines entsprechenden Textilgewebes besteht, die entlang ihrer freien Kanten durch Nähen miteinander verbunden sind, wobei wenigstens 50% der Länge der Nahtstrecke als Innennaht (7) und der Rest als im unteren Abschnitt des aufgeblasenen und entfalteten Gassacks verlaufende Außennaht (8) ausgebildet ist.

2. Airbag-Modul nach Anspruch 1, dadurch gekennzeichnet, daß der Gassack aus einem einteiligen um die Projektionsachse (2) gefalteten Gewebezuschnitt (1) besteht.

3. Airbag-Modul nach einem der Ansprüche 1 und 2 dadurch gekennzeichnet, daß der Übergang von der Innennaht (7) zur Außennaht (8) als Auströmöffnung für das Gas ausgebildet ist.
